# EUROPEAN PATENT APPLICATION

(11) **EP 4 342 310 A1**
(43) Date of publication of application: **27.03.2024**
(21) Application number: 22197282.1
(22) Date of filing: 23.09.2022
(51) Int. Cl.: A23N 15/00, A23N 7/08, B26D 3/26, A23N 7/00

(54) **FRUIT PROCESSING SYSTEM**

(71) Applicant: A-Tech System Co., Ltd., Taichung City 40768 (TW)
(72) Inventor: YANG, Hung-Chih, 40768 Taichung City (TW)
(74) Representative: Gille Hrabal Partnerschaftsgesellschaft mbB Patentanwälte

(57) **Abstract**

A fruit processing system includes a feeding device (10), a slicing device (20), and a sorting device (30) that includes a detecting unit (3) and a cutting unit (4). The detecting unit (3) inspects a fruit slice (8) to distinguish among a core (81), fruit flesh (82) and a peel (83) of the fruit slice (8) and to determine whether there is a defect (84) in it, and generates first and second cutting paths (D1, D2) for separating the core (81), the fruit flesh (82) and the peel (83) from each other and, when there is a defect (84), a third cutting path (D3) for separating a defect-containing part of the fruit slice (8) from a defect-free part of the fruit slice (8). The cutting unit (4) cuts the fruit slice (8) along the first, the second, and the third, if any, cutting paths (D1, D2, D3)

## Description

The disclosure relates to a processing system, and more particularly to a fruit processing system adapted for defect detection in a pineapple and for separating fruit flesh from the pineapple in an automated manner.

A conventional multi-blade pineapple processing apparatus is disclosed in Taiwanese Utility Model Patent No. M388850U. Referring to Figure 1, the conventional multi-blade pineapple processing apparatus includes a base 91, an annular cylinder 92, a blade assembly 93 that is disposed in the annular cylinder 92, and a pressing member 94 that is disposed over the annular cylinder 92 and that is manually operable to move vertically relative to the annular cylinder 92. The blade assembly 93 includes a shaft 931, a coring blade 932 that is hollow and that is disposed on a top end of the shaft 931, four cutting blades 933 that are radially disposed on and surround the shaft 931, four peeling blades 934 that are respectively disposed on the cutting blades 933, and four adjusting rods 935 that extend through the annular cylinder 92 and that respectively abut against the peeling blades 934. The peeling blades 934 surround the cutting blades 933, and any adjacent two of the peeling blades 934 interlock with each other. In use, a pineapple with the top and bottom cut off is placed in the annular cylinder 92 and over the blade assembly 93, and then the pressing member 94 is operated to press the pineapple downward into the blade assembly 93 to core, peel and cut fruit flesh of the pineapple. For differently-sized pineapples, depths of extension of the adjusting rods 935 into the annular cylinder 92 may be adjusted by operating the adjusting rods 935 so that a circumference formed by the peeling blades 934 surrounding the cutting blades 933 may be changed correspondingly, thereby promoting convenience in peeling the pineapples. However, operating the pressing member 94 is labor intensive, and each time a pineapple is to be processed, the circumference formed by the peeling blades 934 needs to be manually adjusted based on the size of the pineapple, which is time consuming. Moreover, the manual adjustment may be inaccurate, causing waste of fruit flesh during the process of peeling pineapples.

Therefore, an object of the disclosure is to provide a fruit processing system that can alleviate at least one of the drawbacks of the prior art. The fruit processing system of this disclosure processes fruits using machine-vision-based visual inspection and water jets so as to save time and labor and to reduce waste of fruit flesh.

According to the disclosure, the fruit processing system is adapted for defect detection in a fruit and separating fruit flesh from the fruit. The fruit processing system includes a feeding device that is configured to move a fruit, a slicing device that is arranged downstream of the feeding device and that is configured to slice the fruit into fruit slices, and a sorting device that is arranged downstream of the slicing device. Each of the fruit slices is in the shape of a disk, and has a core, fruit flesh that surrounds the core, and a peel that surrounds the fruit flesh. The sorting device includes a detecting unit and a cutting unit. The detecting unit is configured to, with respect to each of the fruit slices, inspect the fruit slice through machine-vision-based visual inspection so as to distinguish among the core, the fruit flesh and the peel and so as to determine whether there is a defect in the fruit slice, and generate a first cutting path for separating the core from the fruit flesh, a second cutting path for separating the peel from the fruit flesh and, when the detecting unit determines that there is a defect in the fruit slice, a third cutting path for separating a defect-containing part of the fruit slice, which contains a defect area containing the defect, from a remaining, defect-free part of the fruit slice. The cutting unit is arranged downstream of the detecting unit and is configured to, with respect to each of the fruit slices, cut the fruit slice using water jets along the first cutting path, along the second cutting path and, when the fruit slice has a defect, along the third cutting path.

Other features and advantages of the disclosure will become apparent in the following detailed description of the embodiment(s) with reference to the accompanying drawings. It is noted that various features may not be drawn to scale.

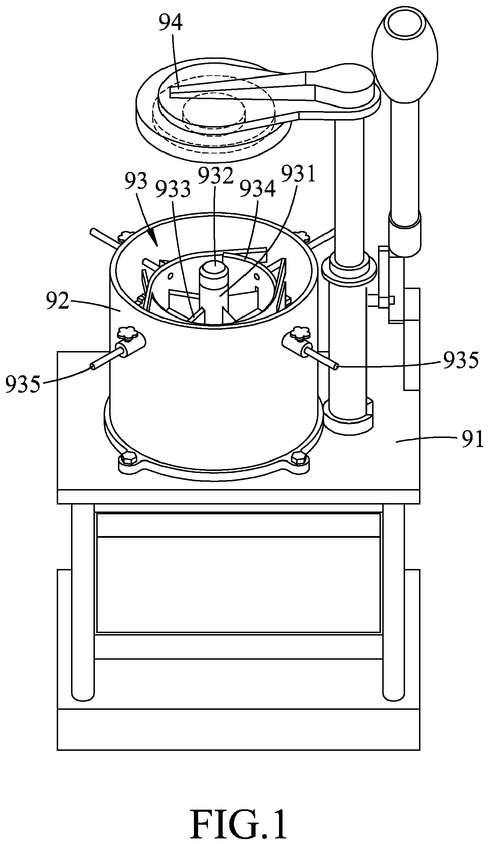

Figure 1 is a perspective view illustrating a conventional multi-blade pineapple processing apparatus.
Figure 2 is a perspective view illustrating an embodiment of a fruit processing system according to the disclosure.
Figure 3 is an exploded perspective view illustrating an embodiment of the fruit processing system according to the disclosure.
Figure 4 is a block diagram illustrating an embodiment of the fruit processing system according to the disclosure.
Figure 5 is a bottom view illustrating an embodiment of the fruit processing system according to the disclosure.
Figure 6 is a top view illustrating an embodiment of the fruit processing system according to the disclosure.
Figure 7 is a perspective view illustrating an embodiment of a sensing unit according to the disclosure.
Figure 8 is schematic diagram illustrating an embodiment of cutting paths of a fruit slice according to the disclosure.
Figure 9 is a perspective view illustrating an embodiment of a first cutting module according to the disclosure.
Figure 10 is a perspective view illustrating an embodiment of a second cutting module according to the disclosure.
Figure 11 is a perspective view illustrating an embodiment of a coring unit according to the disclosure.
Figure 12 is a perspective view illustrating an embodiment of a collecting unit according to the disclosure.
Figure 13 is a perspective view illustrating an embodiment of a clearing unit according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

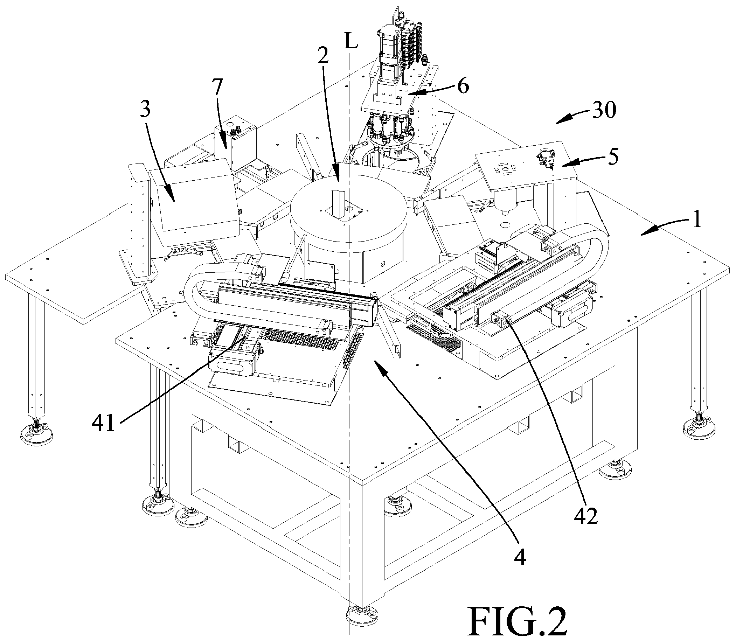

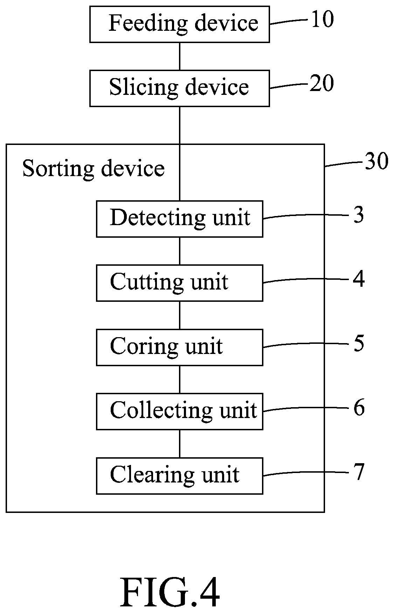

Referring to Figures 2 to 4, a fruit processing system according to an embodiment of the disclosure is illustrated. The fruit processing system is adapted for defect detection in a fruit and for separating fruit flesh from skin or peel of the fruit. The fruit processing system includes a feeding device 10, a slicing device 20 and a sorting device 30. In some embodiments, the fruit processing system is configured to detect defect in fruit flesh of pineapples using machine-vision-based visual inspection and cut the fruit flesh using water jets. However, the fruit to be processed by the fruit processing system of this disclosure is not limited to pineapples, and may be other kinds of fruit.

The feeding device 10 is configured to move a pineapple. Specifically, the feeding device 10 includes a robotic arm (not shown) that feeds the pineapple into the slicing device 20 by picking up the pineapple and placing the pineapple in the slicing device 20. The slicing device 20 is arranged downstream of the feeding device 10, and is configured to slice the pineapple into fruit slices (i.e., pineapple slices). Each of the fruit slices is in the shape of a disk, and has a core, fruit flesh that surrounds the core and a peel that surrounds the fruit flesh. The robotic arm then feeds the fruit slices into the sorting device 30, one at a time.

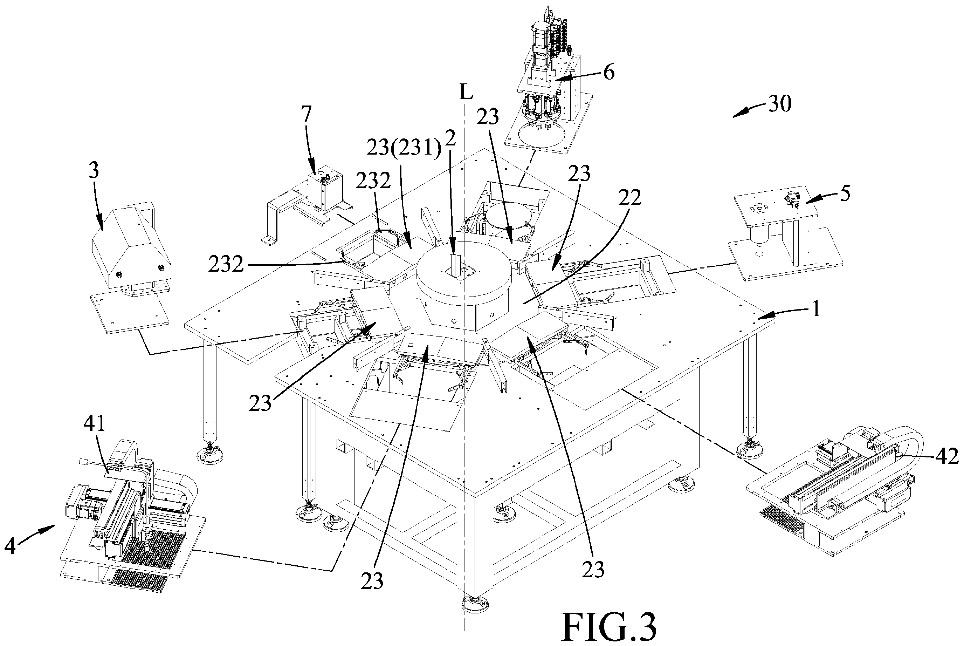

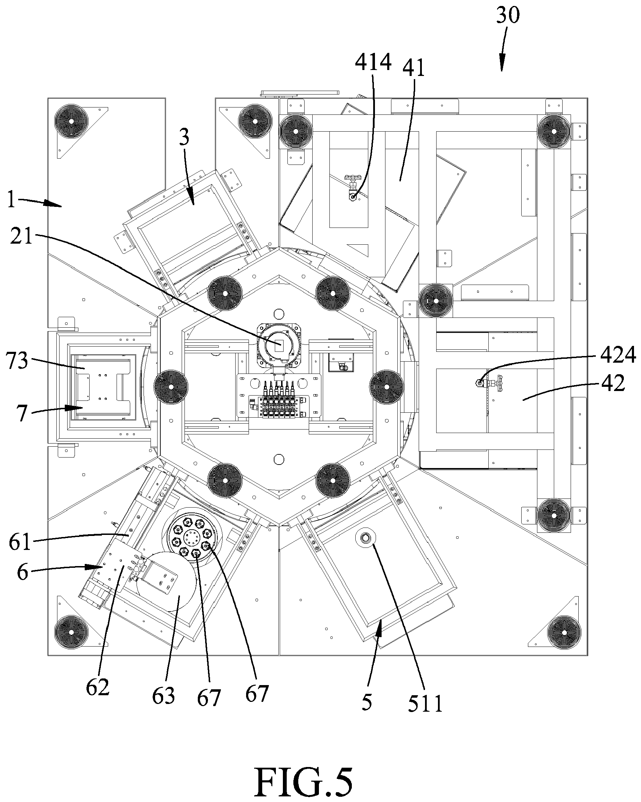

Referring to Figures 3 to 5, the sorting device 30 includes a table 1, a rotation unit 2, a detecting unit 3, a cutting unit 4, a coring unit 5, a collecting unit 6 and a clearing unit 7. The cutting unit 4 includes a first cutting module 41 and a second cutting module 42. Figure 5 is a bottom view of an embodiment of the fruit processing system.

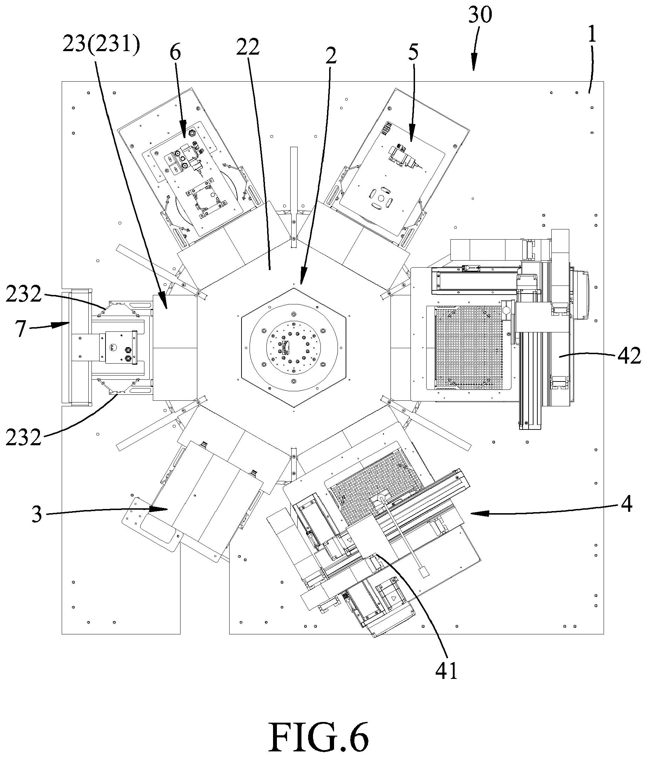

The rotation unit 2 is disposed on the table 1. Specifically, the rotation unit 2 includes a motor 21, a shaft 22 that is driven by the motor 21 to rotate about an axis L and that is rotatably mounted on the table 1, and six gripping modules 23 that are disposed on the shaft 22, that surround the axis L, and that are spaced apart from each other and arranged at equal intervals. In other words, the shaft 22, driven by the motor 21, brings the gripping modules 23 to rotate about the axis L. The detecting unit 3, the first cutting module 41, the second cutting module 42, the coring unit 5, the collecting unit 6 and the clearing unit 7 are disposed on the table 1, surround the shaft 22, and are spaced apart from each other (see Figure 6 which is a top view of an embodiment of the fruit processing system). Each of the gripping modules 23 grips an individual fruit slice of the fruit slices and transports the individual fruit slice to the detecting unit 3, the first cutting module 41, the second cutting module 42, the coring unit 5, the collecting unit 6 and the clearing unit 7, sequentially, while rotating about the axis L. Each of the gripping modules 23 includes a gripper driver 231, and two grippers 232 that are spaced apart from each other and that are driven by the gripper driver 231 to hold the individual fruit slice tightly.

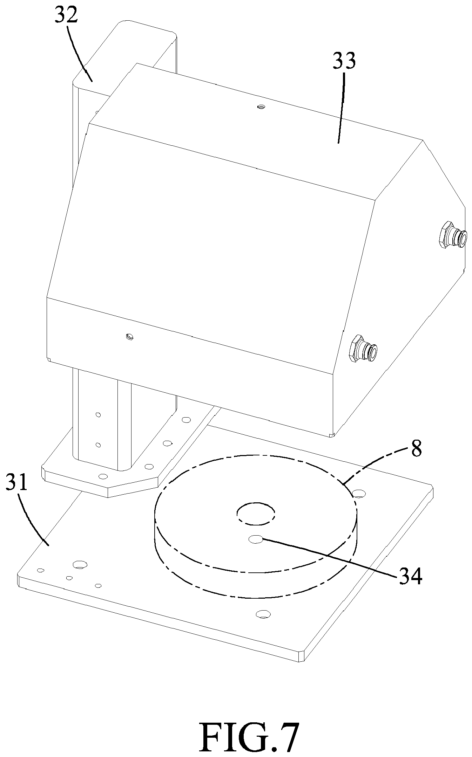

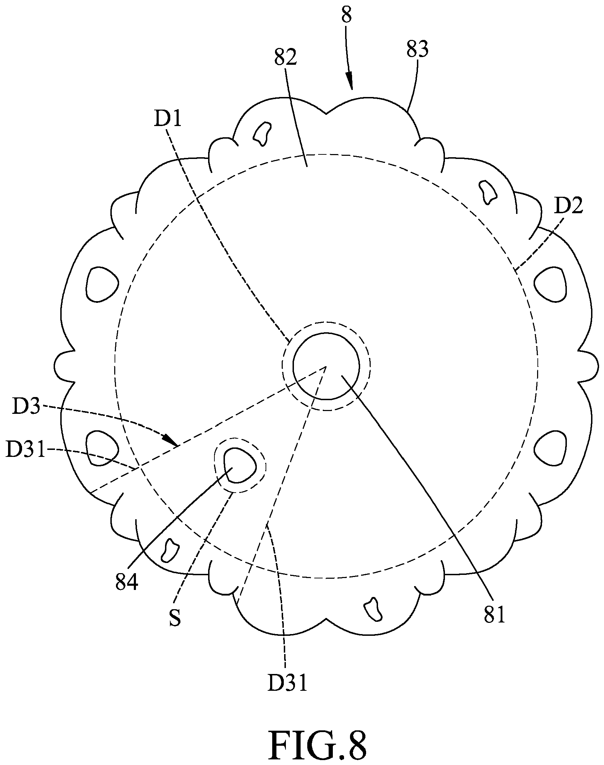

Referring to Figures 6 to 8, the detecting unit 3 includes a detector base 31 that is disposed on the table 1 and that is configured for placement of an individual fruit slice of the fruit slices (e.g., a fruit slice 8 shown in Figure 8) thereon, a detector frame 32 that is disposed on the detector base 31, and a detector 33 that is disposed on the detector frame 32 and over the detector base 31. The detector base 31 includes an alignment mark 34 that is provided for alignment of the individual fruit slice on the detector base 31. In some embodiments, the alignment mark 34 is a circle mark that is recognizable by the detector 33 and that is provided for the core of the individual fruit slice to be aligned therewith. However, the form of the alignment mark 34 is not limited to a circle, as long as the alignment mark 34 is recognizable by the detector 33 and capable of serving as a reference for alignment of the individual fruit slice on the detector base 31.

The detecting unit 3 is configured to, with respect to each of the fruit slices, inspect the fruit slice 8 through machine-vision-based visual inspection so as to distinguish among the core 81, the fruit flesh 82 and the peel 83 and so as to determine whether there is a defect 84 in the fruit slice 8, and generate a first cutting path D1 for separating the core 81 from the fruit flesh 82, a second cutting path D2 for separating the peel 83 from the fruit flesh 82, and, when the detecting unit 3 determines that there is a defect 84 in the fruit slice 8, a third cutting path D3 for separating a defect-containing part of the fruit slice 8, which contains the defect 84, from the remaining, defect-free part of the fruit slice 8 (which is in good condition and has no defects). In a scenario where the fruit slice 8 has a defect 84, the detector 33 determines, using machine-vision-based visual inspection, a defect boundary line S in the fruit slice 8 that encircles the defect 84, and generates the third cutting path D3 that confines an area (hereinafter referred to as "defect area") defined by the defect boundary line S. Specifically, the detector 33 is configured to inspect the fruit slice 8 using automated optical inspection. In some embodiments, the detector 33 may include a camera (not shown) that scans the fruit slice 8 to generate a scan image, and a processor (not shown) that is programmed to perform grayscale conversion and binarization on the scan image so as to result in a binarized image, and to perform object detection based on the binarized image so as to distinguish among the core 81, the fruit flesh 82 and the peel 83 and to determine whether there is a defect 84 in the fruit slice 8. The processor of the detector 33 is further programmed to use cutting path planning technology to generate the first cutting path D1, the second cutting path D2, and the third cutting path D3, if any.

In some embodiments, the first cutting path D1 is substantially circular in shape and is located nearby a junction between the core 81 and the fruit flesh 82 of the fruit slice 8, and the first cutting path D2 is substantially circular in shape and is located nearby a junction between the fruit flesh 82 and the peel 83 of the fruit slice 8. The third cutting path D3 includes two cutting path segments D31 that extend from the core 81 to the peel 83 and that are located on two opposite sides of the defect area. The cutting path segments D31 define a defect-containing part of the fruit slice 8 that includes the defect area, and hence contains the defect 84. In some embodiments, the shapes of the first cutting path D1, the second cutting path D2 and the third cutting path D3 are not limited to the example shown in Figure 8, as long as the cutting paths can separate the core 81 and the peel 83 from the fruit flesh 82, and separate the defect-containing part and the defect-free part. In some embodiments, if the fruit slice 8 has two or more defects, the third cutting path D3 may include two or more cutting path segments D31 to separate one or more defect-containing parts, each containing one or more defects, from the remaining, defect-free part(s) of the fruit slice 8. It should be noted herein that for simplicity, except for Figure 8, the fruit slice 8 shown in other drawings, if any, is drawn as a simple round disc.

In some embodiments, the detector 3 is further configured to generate detector information that indicates the core 81, the fruit flesh 82 and the peel 83 thus recognized from the fruit slice 8, that indicates whether there is a defect 84 in the fruit slice 8 (i.e., whether the fruit slice 8 has a defect 84) and that includes the first cutting path D1, the second cutting path D2, and the third cutting path D3, if any, thus generated, and to transmit the detector information to the rotation unit 2, the cutting unit 4, the coring unit 5 and the collecting unit 6.

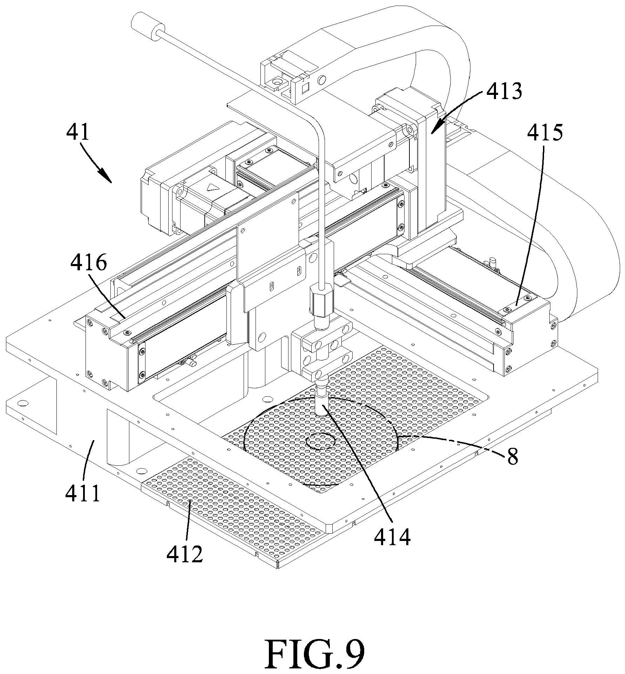

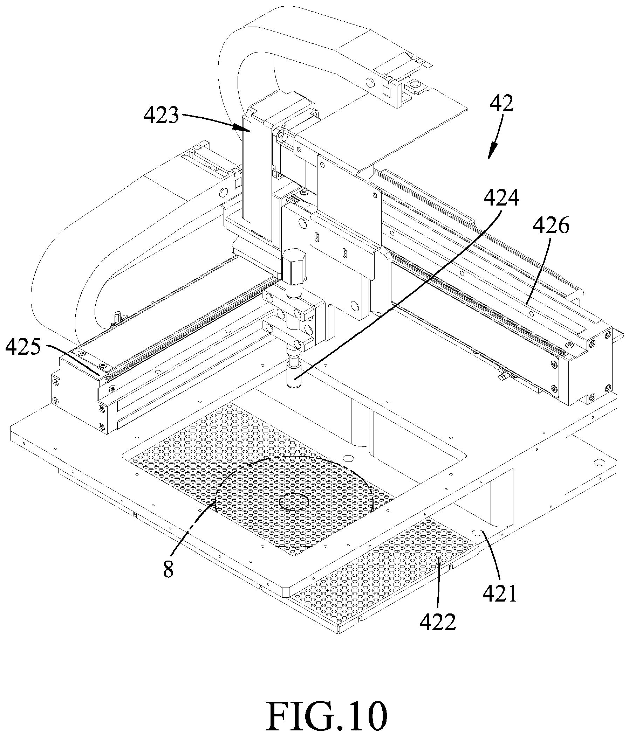

Referring to Figures 6, 8, 9 and 10, the cutting unit 4 is arranged downstream of the detecting unit 3 and is configured to, with respect to each of the fruit slices, cut the fruit slice 8 using water jets along the first cutting path D1, along the second cutting path D2, and, when the fruit slice 8 has one or more defects 84, along the third cutting path D3.

Specifically, the first cutting module 41 of the cutting unit 4 is arranged downstream of the detecting unit 3, and the second cutting module 42 is arranged downstream of the first cutting module 41. The first cutting module 41 includes a first module base 411 that is disposed on the table 1, a first mesh plate 412 that is disposed on the first module base 411, a first motion platform 413 that is disposed on the first module base 411, and a first water jet cutter 414 that is disposed on the first motion platform 413 and that ejects a water jet downward to the first mesh plate 412. The first motion platform 413 includes a first lower guide 415 that is disposed on the first module base 411 and that extends along a first direction parallel to the first module base 411, and a first upper guide 416 that is movably mounted to a top side of the first lower guide 415, that extends along a second direction parallel to the first module base 411 and perpendicular to the first direction, and that is movable in the first direction. The first water jet cutter 414 is movably mounted to the first upper guide 416 and is movable in the second direction. With such arrangement of the first lower guide 415, the first upper guide 416 and the first water jet cutter 414, the first water jet cutter 414 can essentially move along paths on a first virtual plane that is defined by the first and second directions and parallel to the first module base 411. Similarly, the second cutting module 42 includes a second module base 421 that is disposed on the table 1, a second mesh plate 422 that is disposed on the second module base 421, a second motion platform 423 that is disposed on the second module base 421, and a second water jet cutter 424 that is disposed on the second motion platform 423 and that ejects another water jet downward to the second mesh plate 422. The second motion platform 423 includes a second lower guide 425 that is disposed on the second module base 421 and that extends along a third direction parallel to the second module base 421, and a second upper guide 426 that is movably mounted to a top side of the second lower guide 425, that extends along a fourth direction parallel to the second module base 421 and perpendicular to the third direction, and that is movable in the third direction. The second water jet cutter 424 is movably mounted to the second upper guide 426 and is movable in the fourth direction. With such arrangement of the second lower guide 425, the second upper guide 426 and the second water jet cutter 424, the second water jet cutter 424 can essentially move along paths on a second virtual plane that is defined by the third and fourth directions and parallel to the second module base 421.

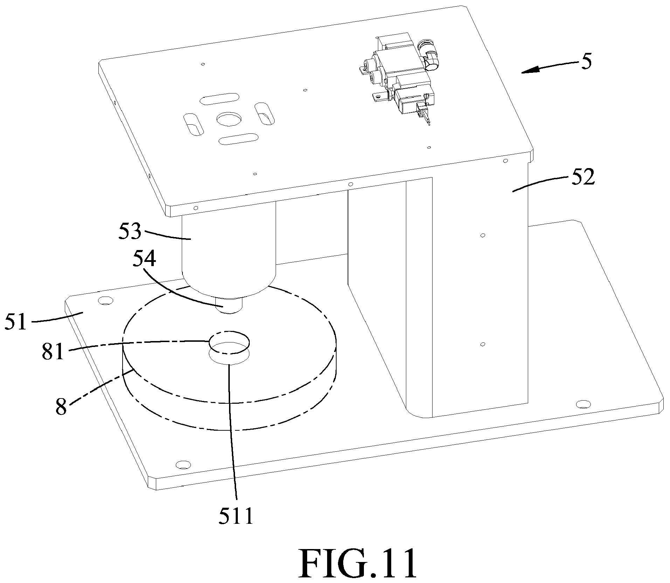

Referring to Figures 6 and 11, the coring unit 5 is arranged downstream of the second cutting module 42 of the cutting unit 4. The coring unit 5 includes a corer base 51 that is disposed on the table 1, a corer frame 52 that is disposed on the corer base 51, a corer driver 53 that is disposed on the corer frame 52, and a corer head 54 that is disposed on the corer driver 53 and that is driven by the corer driver 53 to move in a vertical direction (i.e., an up-down direction). The corer base 51 has a through hole 511 located below the corer head 54.

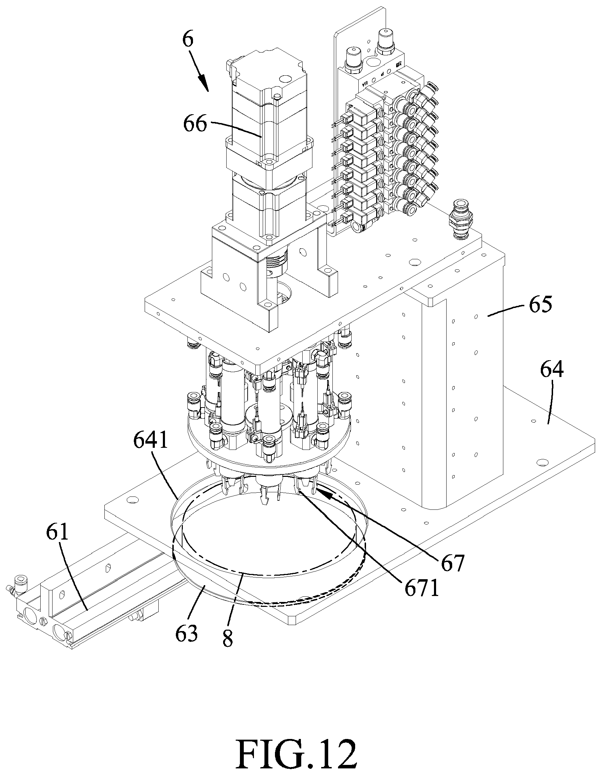

Referring to Figures 5, 6 and 12, the collecting unit 6 is arranged downstream of the coring unit 5. The collecting unit 6 includes a carrier guide 61 that is disposed on the table 1, a sliding base 62 that is movably mounted to the carrier guide 61 and that is movable in a direction where the carrier guide 61 extends, a carrier plate 63 that is disposed on the sliding base 62, a collector base 64 that is disposed on the table 1 and that is disposed over the carrier plate 63, a collector frame 65 that is disposed on the collector base 64, a collector driver 66 that is disposed on the collector frame 65, and a plurality of flesh collectors 67 that are disposed on the collector frame 65 and that are individually driven by the collector driver 66 to move in the vertical direction. The collector base 64 has an opening 641 that is located between the carrier plate 63 and the flesh collectors 67. Each of the flesh collectors 67 includes three retractable collector forks 671 that are each in the shape of an arrowhead. In some embodiments, the collecting unit 6 includes eight flesh collectors 67 that are arranged annularly and spaced apart from each other. However, the number and shapes of the flesh collectors 67 are not limited to the example shown in Figure 12, and may vary based on the type of the fruit that is to be processed by the fruit processing system. In some embodiments, the flesh collectors 67 are respectively actuated by multiple pneumatic control valve actuators, so as to move independently in the vertical direction.

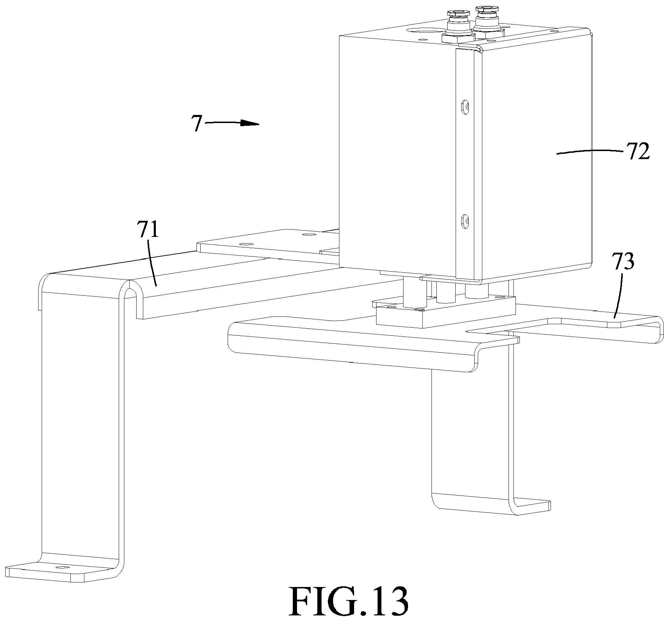

Referring to Figures 6 and 13, the clearing unit 7 is arranged downstream of the collecting unit 6. The clearing unit 7 includes a clearer frame 71 that is disposed on the table 1, a clearing driver 72 that is disposed on the clearing frame 71, and an H-shaped push plate 73 that is disposed on the clearing driver 72 and that is driven by the clearing driver 72 to move in the vertical direction.

In some embodiments, the collecting unit 6, the gripping modules 23, the coring unit 5 and the clearing unit 7 are pneumatically powered to operate, but in other embodiments, the collecting unit 6, the gripping modules 23, the coring unit 5 and the clearing unit 7 may be driven by other forms of power.

In order to describe functions of the respective components in the fruit processing system according to the disclosure in detail, one of the fruit slices 8 is taken as an example to explain an operating procedure of the fruit processing system.

Referring to Figures 2, 7 and 8, the robotic arm (not shown) picks up one of the fruit slices 8 from the slicing device 20 and places the fruit slice 8 on the detector base 31. The detector 33 inspects the fruit slice 8 and distinguishes among the core 81, the fruit flesh 82 and the peel 83 of the fruit slice 8, determines whether the fruit slice 8 has a defect 84, generates the first cutting path D1 and the second cutting path D2, and the third cutting path D3 when it is determined that the fruit slice 8 has a defect 84, and transmits the detector information to the rotation unit 2, the cutting unit 4, the coring unit 5 and the collecting unit 6. It is noted that after the core 81 is recognized (i.e., distinguished from the fruit flesh 82 and the peel 83), the robotic arm may be controlled based on this information to move the fruit slice 8, which is placed on the detector base 31, such that the core 81 is aligned with the alignment mark 34 on the detector base 31.

Referring to Figures 2, 8 and 9, the grippers 232 of one of the gripping modules 23 that corresponds in position to the detecting unit 3 grip the fruit slice 8 and move the fruit slice 8 to the first mesh plate 412 of the first cutting module 41. The first motion platform 413 is configured to, based on the detector information, bring the first water jet cutter 414 to move to make the first water jet cutter 414 cut the fruit slice 8 along the first cutting path D1 and the second cutting path D2 with a water jet.

Referring to Figures 2, 8 and 10, said one of the gripping modules 23 (which now corresponds in position to the first cutting module 41) moves the fruit slice 8, which is gripped by the grippers 232 of said gripping module 23, to the second mesh plate 422 of the second cutting module 42. The second motion platform 423 is configured to, based on the detector information, bring the second water jet cutter 424 to move to make the second water jet cutter 424 cut the fruit slice 8 along the third cutting path D3 with another water jet.

Referring to Figures 2 and 11, said one of the gripping modules 23 (which now corresponds in position to the second cutting module 42) moves the fruit slice 8, which is gripped by the grippers 232 of said gripping module 23, to the corer base 51 of the coring unit 5. The corer head 54 is driven to move downward so as to push the core 81 down, so that the core 81 is physically removed from the fruit slice 8, and falls through the through hole 511 in the corer base 51. In some embodiments, said one of the gripping modules 23 moves the fruit slice 8 to the corer base 51 based on the detector information such that the core 81 of the fruit slice 8 is aligned with the through hole 511.

Referring to Figures 2 and 12, said one of the gripping modules 23 (which now corresponds in position to the coring unit 5) moves the fruit slice 8, which is gripped by the grippers 232 of said gripping module 23, to the carrier plate 63 of the collecting unit 6 that is located under the carrier base 64 and exposed through the opening 641. The collecting unit 6 is configured to pick up all defect-free part(s) of the fruit flesh 82 (excluding the peel 83) from the fruit slice 8. In the event that the fruit slice 8 does not have any defect, the fruit flesh 82 picked up would be whole. In the event that the fruit slice 8 has one or more defects 84, the fruit flesh 82 picked up would be one or more defect-free parts of the fruit flesh 82. Specifically, a portion of the flesh collectors 67 is first controlled, based on the detector information, to extend the collector forks 671 thereof to pierce and grab the defect-free part(s) of the fruit flesh 82 and then move upward, bringing along the defect-free part(s) of the fruit flesh 82. Next, said one of the gripping modules 23 (which now corresponds in position to the collecting unit 6) brings the peel 83, which might be in pieces, and any defect-containing part of the fruit flesh 82 there is to a location between the collecting unit 6 and the clearing unit 7 while the peel 83 and the defect-containing part(s) of the fruit flesh are gripped by the grippers 232 of said gripping module 23. Subsequently, the portion of the flesh collectors 67 that holds the defect-free part(s) of the fruit flesh 82 thereon keeps moving upward and then retracts the collector forks 671 thereof so that the defect-free part(s) of the fruit flesh 82 detaches and is released from the flesh collectors 67 and falls onto the carrier plate 63. Afterwards, the sliding base 62 brings the carrier plate 63 to move along the carrier guide 61 so as to carry the defect-free part(s) of the fruit flesh 82 to a collecting area (not shown), and then brings the carrier plate 63 back to a location under the carrier base 64 and corresponding to the opening 641. Lastly, the grippers 232 of said one of the gripping modules 23 that are gripping the peel 83 and the defect-containing part(s) of the fruit flesh 82 move the peel 83 and the defect-containing part(s) of the fruit flesh 82 to the clearing unit 7. It is noted that for a fruit slice 8 that does not have any defect, all of the flesh collectors 67 are controlled to move downward to pierce and grab the fruit flesh 82 of the fruit slice 8 together.

Referring to Figures 2 and 13, the push plate 73 of the clearing unit 7 moves downward so as to push the peel 83 and the defect-containing part(s) of the fruit flesh 82 that are gripped by the grippers 232 of said one of the gripping modules 23 downward and clear the same from said one of the gripping modules 23. In a scenario where the fruit slice 8 does not have any defect, the push plate 73 of the clearing unit 7 pushes the peel 83 that is gripped by the grippers 232 of said one of the gripping modules 23 downward so as to clear the peel 83 from the sorting device 30.

It should be appreciated that the fruit processing system of this embodiment may simultaneously process six individual fruit slices, with the detecting unit 3, the first cutting module 41, the second cutting module 42, the coring unit 5, the collecting unit 6 and the clearing unit 7 performing their respective operations on six different fruit slices at the same time.

In summary, the fruit processing system according to the disclosure at least has the following advantages.

The detector 33 of the detecting unit 3 utilizes automated optical inspection to distinguish among the core 81, the fruit flesh 82 and the peel 83 and to determine whether there is any defect in the fruit slice 8; the first cutting module 41 and the second cutting module 42 utilize water jets to cut the fruit slice 8 to separate the core 81 from the fruit flesh 82, to separate the peel 83 from the fruit flesh 82 and to separate the defect-containing part(s) from the remaining defect-free part(s). Since water jets can reduce the risk of bacterial contamination better than regular blades, the fruit may be processed hygienically and efficiently. In addition, the fruit slice 8 is cut along the first cutting path D1, the second cutting path D2, and the third cutting path D3, if any, generated by the detector 33 utilizing machine-vision-based visual inspection so that the majority of the fruit flesh 82 of the fruit slice 8 may be collected and residual fruit flesh left on the core 81 and the peel 83 may be minimized, which reduces waste of fruit flesh 82.

The gripping modules 23 of the rotation unit 2 surround the axis L and rotate about the axis L to convey the fruit slices 8, and each gripping module 23 grips and transports an individual fruit slice to the detecting unit 3, the first cutting module 41, the second cutting module 42, the coring unit 5, the collecting unit 6 and the clearing unit 7, sequentially, for the respective processing. In this way, labor required to transport the fruit slices 8 may be saved, efficiency in inspecting and cutting up the fruit slices 8 may be promoted, and capacity of processing fruit may be increased.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A fruit processing system adapted for defect detection in a fruit and separating fruit flesh (82) from the fruit, the fruit processing system **characterized by**:
a feeding device (10) configured to move a fruit;
a slicing device (20) arranged downstream of the feeding device (10), and configured to slice the fruit into fruit slices, each of the fruit slices being in the shape of a disk, and having a core (81), fruit flesh (82) that surrounds the core (81) and a peel (83) that surrounds the fruit flesh (82);
a sorting device (30) arranged downstream of the slicing device (20), and including
a detecting unit (3) that is configured to, with respect to each of the fruit slices, inspect the fruit slice (8) through machine-vision-based visual inspection so as to distinguish among the core (81), the fruit flesh (82) and the peel (83) and so as to determine whether there is a defect (84) in the fruit slice (82), and generate a first cutting path (D1) for separating the core (81) from the fruit flesh (82), a second cutting path (D2) for separating the peel (83) from the fruit flesh (82) and, when the detecting unit (3) determines that there is a defect (84) in the fruit slice (8), a third cutting path (D3) for separating a defect-containing part of the fruit slice (8), which contains the defect (84), from a remaining, defect-free part of the fruit slice (8), and
a cutting unit (4) that is arranged downstream of the detecting unit (3) and that is configured to, with respect to each of the fruit slices, cut the fruit slice (8) using water jets along the first cutting path (D1), along the second cutting path (D2) and, when the fruit slice (8) has a defect (84), along the third cutting path (D3).

2. The fruit processing system as claimed in claim 1, **characterized in that** the cutting unit (4) includes:
a first cutting module (41) that includes a first module base (411), a first motion platform (413) disposed on the first module base (411), and a first water jet cutter (414) disposed on the first motion platform (413) and configured to eject one of the water jets, the first motion platform (413) configured to, with respect to each of the fruit slices, bring the first water jet cutter (414) to move to make the first water jet cutter (414) cut the fruit slice (8) along the first cutting path (D1) and the second cutting path (D2) with said one of the water jets; and
a second cutting module (42) that includes a second module base (421), a second motion platform (423) disposed on the second module base (421), and a second water jet cutter (424) disposed on the second motion platform (423) and configured to eject another one of the water jets, the second motion platform (423) configured to, with respect to each of the fruit slices that has the defect (84), bring the second water jet cutter (424) to move to make the second water jet cutter (424) cut the fruit slice (8) along the third cutting path (D3) with said another one of the water jets.

3. The fruit processing system as claimed in claim 2, **characterized in that** the sorting device (30) further includes a coring unit (5) that is arranged downstream of the second cutting module (42) and that is configured to, with respect to each of the fruit slices, remove the core (81) from the fruit slice (8).

4. The fruit processing system as claimed in claim 3, **characterized in that** the sorting device (30) further includes a collecting unit (6) that is arranged downstream of the coring unit (5) and that is configured to, with respect to each of the fruit slices, pick up the whole fruit flesh (82) from the fruit slice (8) when the fruit slice (8) does not have any defect (84), and pick up the defect-free part of the fruit flesh (82) from the fruit slice (8) when the fruit slice (8) has a defect (84).

5. The fruit processing system as claimed in claim 4, **characterized in that** the sorting device (30) further includes a clearing unit (7) that is arranged downstream of the collecting unit (6) and that is configured to, with respect to each of the fruit slices, clear the peel (83) from the sorting device (30), and clear the defect-containing part of the fruit flesh (82) from the sorting device (30) when the fruit slice (8) has a defect (84).

6. The fruit processing system as claimed in claim 5, **characterized in that** the sorting device (30) further includes a table (1) and a rotation unit (2) disposed on the table (1), the rotation unit (2) including a shaft (22) that is rotatable about an axis (L) and that is rotatably mounted on the table (1), and six gripping modules (23) that are disposed on the shaft (22) and that surround the axis (L) and spaced apart from each other and arranged at equal intervals, the detecting unit (3), the first cutting module (41), the second cutting module (42), the coring unit (5), the collecting unit (6) and the clearing unit (7) being disposed on the table (1), surrounding the shaft (L) and spaced apart from each other, each of the gripping modules (23) gripping an individual fruit slice of the fruit slices and transporting the individual fruit slice to the detecting unit (3), the first cutting module (41), the second cutting module (42), the coring unit (5), the collecting unit (6) and the clearing unit (7), sequentially.

7. The fruit processing system as claimed in any of claims 1 to 6, **characterized in that** the detecting unit (3) includes a detector base (31) that is configured for placement of an individual fruit slice of the fruit slices, and a detector (33) that is disposed over the detector base (31), the detector base (31) including an alignment mark (34) that is provided for alignment of the individual slice on the detector base (31).

8. The fruit processing system as claimed in claim 7, **characterized in that** the detector (33) is configured to inspect the individual fruit slice using automated optical inspection.

9. The fruit processing system as claimed in any of claims 1 to 8, **characterized in that** the fruit is a pineapple and the fruit slices are pineapple slices.
